# EUROPEAN PATENT APPLICATION

(11) **EP 3 518 257 A1**
(43) Date of publication of application: **31.07.2019**
(21) Application number: 18000066.3
(22) Date of filing: 26.01.2018
(51) Int. Cl.: H01F 27/22, H01F 27/36, H01F 38/08, H01F 27/30

(54) **TRANSFORMER UNIT FOR A RESONANT CONVERTER**

(71) Applicant: FRIWO Gerätebau GmbH, 48346 Ostbevern (DE)
(72) Inventor: XU, Linzhong, 48268 Greven (DE)
(74) Representative: Grünecker Patent- und Rechtsanwälte PartG mbB

(57) **Abstract**

Transformer unit (100) for a resonant converter comprising; a primary winding (202) loosely coupled by induction to at least one secondary winding (204), whereby a leakage inductance is generated, and a shielding element (300) covering at least one of the primary winding (202) or the secondary winding (204) for blocking electromagnetic noise generated by the leakage inductance, wherein the shielding element (300) is thermally coupled to at least one of the primary winding or the secondary winding for transferring heat generated by the transformer unit (100).

## Description

The present invention relates to a transformer unit for a resonant converter. Further, the present invention relates to a resonant converter comprising said transformer unit. Additionally, the present invention relates to a switching power supply comprising said resonant converter.

Generally, resonant power conversion has the advantage of smooth waveforms and high power density. Operating a converter in resonant mode, at the point where the impedance between the input and output of the circuit is at its minimum, also provides improved efficiency. From their physical principle, resonant converters are switching converters that include a resonant tank circuit actively participating in determining input-to-output power flow. Resonant converters are based on a resonant inverter, i. e. a system that converts a DC voltage into a sinusoidal voltage (more generally, into a low harmonic content AC voltage), and provides AC power to a load. To do so, a switch network typically produces a square-wave voltage that is applied to a resonant tank tuned to the fundamental component of the square wave. In this way, the tank will respond primarily to this component and negligibly to the higher order harmonics, so that its voltage and/or current, as well as those of the load, will be essentially sinusoidal or piecewise sinusoidal. A resonant DC-DC converter able to provide DC power to a load can be obtained by rectifying and filtering the AC output of a resonant inverter.

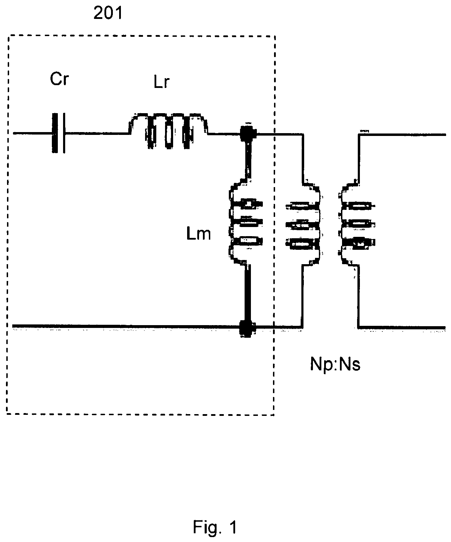

Different types of DC-AC inverters can be built, depending on the type of switch network and on the characteristics of the resonant tank, i.e. the number of its reactive elements (capacitors and inductors) and their configuration. In more detail, in a resonant power converter, at least two reactive elements are added around the switch to generate the sinusoidal voltage or current. Fig. 1 shows a resonant converter with a tank circuit 201 comprising three reactive elements Cr, Lr, Lm in the LLC configuration and a transformer Np : Ns.

There are two ways to implement the magnetic components of the tank circuit. One is to have an ideal or near ideal transformer and a separate inductor. In more detail, the ideal transformer model assumes that all flux generated by the primary winding links all the turns of every winding, including itself. In practice, some flux traverses paths that take it outside the windings. Such flux is termed leakage flux and results in leakage inductance in series with the mutually coupled transformer windings. Leakage flux results in energy being alternately stored in and discharged from the magnetic fields with each cycle of the power supply. It is not directly a power loss, but results in inferior voltage regulation, causing the secondary voltage not to be directly proportional to the primary voltage, particularly under heavy load. Usually, the leakage inductance is an undesirable property, as it causes the voltage to change with loading. Transformers designed to decrease the leakage inductance are referred to in this document as ideal or near ideal transformers.

A second way to implement the magnetic components of the tank circuit is to integrate the resonance inductance into the transformer. In more detail, a transformer comprising a primary winding loosely coupled by induction to a secondary winding generates a leakage inductance. The leakage inductance is in series with the mutually coupled transformer windings and can be used as the resonance inductance Lr for the tank circuit. Transformers designed to generate in operation a certain amount of leakage inductance are referred to in this document as integrated transformers.

Transformers, which are used to increase or decrease the alternating voltages in electric power applications, are in general designed to be ideal or near ideal transformers. For some applications, for example for resonant converters, however, integrated transformers with a certain amount of leakage inductance are advantageous. In particular, the number of electrical components can be reduced. For example, the resonant inductance in a tank circuit for a resonant converter can be integrated in the transformer. Consequently, an integrated transformer enables to reduce costs and allows a more compact design.

However, the integrated transformer has also some disadvantages, which are caused by the loosely coupled windings. For example, the leakage inductance generates a big magnetic stray field causing electromagnetic interference (EMI) problems. Further, in order to create the loose coupling, the primary and secondary windings are separated, thereby reducing the thermal coupling between the windings and causing thermal problems of the transformer.

The object underlying the invention is to optimize a transformer unit for a resonant converter. A further object underlying the invention is to reduce assembling complexity for a resonant converter, as for example by reducing the number of electrical components, e.g. reducing reactive elements, and at the same time reducing the mechanical components, e.g. elements for thermal management and elements used for EMI shielding. Additionally, an object of the present invention is to reduce the costs and allowing at the same time a compact and stable design of an integrated transformer.

At least one of these objects is solved by the subject matter of the independent claim. Advantageous embodiments of the invention are the subject matter of the dependent claims.

The present invention is based on the idea that a transformer unit for a resonant converter comprises a primary winding loosely coupled by induction to at least one secondary winding, whereby a leakage inductance is generated. The transformer unit further comprises a shielding element covering at least one of the primary winding or the secondary winding for blocking electromagnetic noise generated by the leakage inductance, and wherein the shielding element is thermally coupled to at least one of the primary winding or the secondary winding for transferring heat generated by the transformer unit.

A transformer with loosely coupled windings, i.e. an integrated transformer, is advantageous as the number of electrical components can be reduced. In particular, for a resonant converter the leakage inductance is used as resonance inductance. For the person skilled in the art is clear that the leakage inductance is primarily controlled by the design of the windings and the geometry of the magnetic core used to form the transformer. Consequently, the leakage inductance can be controlled by the design of the windings and by their position in the transformer unit.

Furthermore, an integrated transformer is particularly advantageous as a nearly ideal transformer with a separate inductor would need more space and is also more expensive. Consequently, such an integrated transformer enables a cost efficient and compact design.

Additionally, using a shielding element reduces EMI problems caused by same leakage inductance, when the transformer is in operation. In particular, electromagnetic shielding is the practice of reducing the electromagnetic field in a space by blocking the field with barriers made of conductive or magnetic materials. The amount of reduction depends upon the material used, its thickness, the size of the shielded volume and the frequency of the fields of interest and the size, shape and orientation of apertures in a shield to an incident electromagnetic field. For the person skilled in the art is clear that electromagnetic waves consist of synchronized oscillations of electric and magnetic fields. Consequently, it is sufficient to either block the electric field or the magnetic field. In a particularly advantageous embodiment of the present invention, the electric field is blocked by a metal such as aluminum.

Moreover, it is clear for a person skilled in the art that electromagnetic waves are self-propagating transverse oscillating waves of electric and magnetic field. Consequently, it is sufficient to block a part of the electric field to reduce the EMI noise caused by the leakage inductance. In a particularly advantageous embodiment, the noise of the transformer is reduced by covering either the primary winding or the secondary winding. This solution has the particular advantage that safety requirements, for example regarding the creepage distance, can be easily met. In particular, the shielding element can be placed very closely to one winding, and thus, the shielding efficiency can be increased by still having enough safety distance between the primary winding and the secondary winding.

Advantageously, the shielding element covers the primary winding. Thus, a user equipment, which is connected to the secondary side, is protected as an undesired operation of primary side of the transformer, e.g. a break of the electric conductors forming the primary windings, does not influence the secondary side. However, for the person skilled in the art is clear that the present invention is not limited to a shielding element covering only the primary winding.

Further, thermally coupling the shielding element to the at least one of the primary or secondary winding additionally reduces the number of parts. Furthermore, in an integrated transformer the primary winding and the secondary winding are physically separated with a relatively big distance. Consequently, the thermally coupled shielding element can be placed very closely to the winding and still have enough safety distance between the primary winding and the secondary winding. By positioning the thermally coupled shielding element closely to the primary winding or the secondary winding the respective winding is efficiently cooled and the thermal management of the transformer is improved. Advantageously, the shielding element thermally couples to the primary winding, as in general the temperature of the primary winding is higher than the temperature of the secondary winding. However, for the person skilled in the art is clear that the present invention is not limited to shielding element coupling only thermally to the primary winding.

In particular, using a shielding element that is thermally coupled to one winding of a transformer enables a thermal management of this winding. Additionally, this cooling allows at least an indirect thermal management of the other windings of the transformer that is not thermally coupled to the shielding element. Consequently, other active cooling elements, such as a fan, are not necessary. This saves cost and space and also avoids audible noise or other issues related to active cooling elements such as fans. Additionally, the construction allows a better EMI performance as no additional EMI shield or EMI filter is necessary, which additionally saves cost and space. Furthermore, a compact design with high power density can be cost-efficient realized without active cooling.

For a person skilled is clear that the present invention is not limited to a transformer with only one secondary winding. For example, the primary winding can be loosely coupled by induction to any number of secondary windings.

According to an advantageous embodiment, the shielding element of the transformer unit further comprises a heat sink portion for dissipating the transferred heat to a fluid. The heat sink is a passive heat exchanger that transfers the heat generated by an electronic or a mechanical device, for example the primary winding of the transformer unit, to a fluid medium, often air or a liquid coolant, where it is dissipated away from the device, thereby allowing regulation of the device's temperature at optimal levels. The heat sink is designed to maximize its surface area in contact with the cooling medium surrounding it, such as the air. According to a particularly advantageous embodiment, the heat sink portion is made of aluminum as a low-cost and lightweight material.

Additionally or alternatively, the shielding element of the transformer unit further comprises a clamping portion for pressing the shielding element to the transformer unit. The clamping element is a fastening device used to hold and/or secure objects, i.e. the shielding element and the transformer unit with the winding, tightly together to prevent movement or separation thereby increasing the thermal coupling.

According to another advantageous embodiment, the shielding element of the transformer unit is fabricated from a stamped and bent metal sheet. Thus, the shielding element can be fabricated cost efficiently with high precision. In a particularly advantageous embodiment, the clamping element is formed by a U-shaped portion of the stamped and bent metal sheet.

Additionally or alternatively, the transformer unit further comprises an elastic thermal coupling element for thermally coupling the shielding element to at least one of the primary winding or the secondary winding. Thus, the thermal coupling between the shielding element and the transformer unit can be increased and the thermal management of the transformer can be optimized. In a particularly advantageous embodiment, the elastic thermal coupling element additionally prevents damages of the windings, when the shielding element is pressed to the winding with the clamping element.

According to another advantageous embodiment, the first winding and the second winding of the transformer unit have a common longitudinal axis. Thus, the leakage inductance can be controlled by a space formed between the windings.

Additionally or alternatively, the transformer unit further comprises a first bobbin carrying the first winding and a second bobbin carrying the second winding. A bobbin is a spindle or cylinder, with or without flanges, on which the electric conductor forming the windings is wound. Thus, the bobbin stabilizes the windings. In a particularly advantageous embodiment, the first bobbin and the second bobbin are fabricated as a single piece having one longitudinal axis. Thus, the windings are easily positioned along a common longitudinal axis and the dimension of the space between the windings, which causes the leakage inductance, can be precisely controlled.

According to another advantageous embodiment, the transformer unit further comprises an insulation barrier for increasing the creepage distance, wherein the insulation barrier is arranged between the first bobbin and the second bobbin. Thus, the safety requirements for creepage and clearance distance according to the standard EN60335-2-29 [DIN EN 60335-2-29:2010-11; VDE 0700-29:2010-11 Household and similar electrical appliances - Safety - Part 2-29: Particular requirements for battery chargers (*IEC 60335-2-29:2002* + *A1:2004* + *A2:2009); German version EN 60335-2-29:2004* + *A2:2010*] or EN60664-1 *[DIN EN 60664-1:2008-01; VDE 0110-1:2008-01 Insulation coordination for equipment within low-voltage systems* - *Part 1: Principles, requirements and tests (IEC 60664-1:2007); German version EN 60664-1:2007]* can be easily met.

Additionally or alternatively, the primary winding and/or the secondary winding of the transformer comprise a magnetic core. According to a particularly advantageous embodiment, the magnetic core has a three-legged structure for forming a closed magnetic system. Advantageously, the magnetic core is made of ferrite and has an E-shaped structure, an EFD-shaped structure, an ETD-shaped structure, or the like. The presence of the high permeability core forming a closed magnetic system increases the inductance and thus the efficiency of transformer unit.

According to another embodiment of the present invention, a resonant power converter comprises a switch network supplying an alternating voltage to a resonant tank, wherein the resonant tank comprises a resonant inductance and at least one reactive element, a transformer, and wherein the resonant inductance and the transformer are formed by the above described transformer unit. Thus, the number of reactive elements for the resonant tank can be reduced. In particular, the resonant inductance can be integrated in the transformer unit.

According to yet another embodiment of the present invention, a switching power supply comprises a printed circuit board (PCB) electrically connecting the above discussed resonant power converter. Thus, the reactive elements, for example the capacitances, can be easily assembled on the PCB.

Advantageously, the printed circuit board of the switching power supply mechanically supports the shielding element. Thus, the shielding element can be stabilized.

According to a particularly advantage embodiment, the shielding element is thermally coupled to at least one power electronic component, for example a MOSFET for switching the switch network, supported by the PCB for transferring heat generated by the power electronic component. Thus, the thermal properties of the switching power supply can be improved without increasing the number of components.

Additionally or alternatively, a housing element of the switching power supply comprises a second heat sink, wherein the second heat sink is thermally coupled to the shielding element. Thus, the thermal properties of the switching power supply can be improved.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **Fig. 1**: is a schematic circuit diagram of a LLC resonant converter;
- **Fig. 2**: is an exploded view of a switching power supply with a transformer unit according to the present invention;
- **Fig. 3**: is an exploded view of a transformer;
- **Fig. 4**: is a schematic perspective view of a bobbin;
- **Fig. 5**: is a further schematic perspective view of the bobbin;
- **Fig. 6**: is a schematic planar view of the bobbin;
- **Fig. 7**: is a further schematic planar view of the bobbin;
- **Fig. 8**: is a further schematic planar view of the bobbin;
- **Fig. 9**: is a further schematic planar view of the bobbin;
- **Fig. 10**: is a sectional view along the line X-X of Fig. 7.

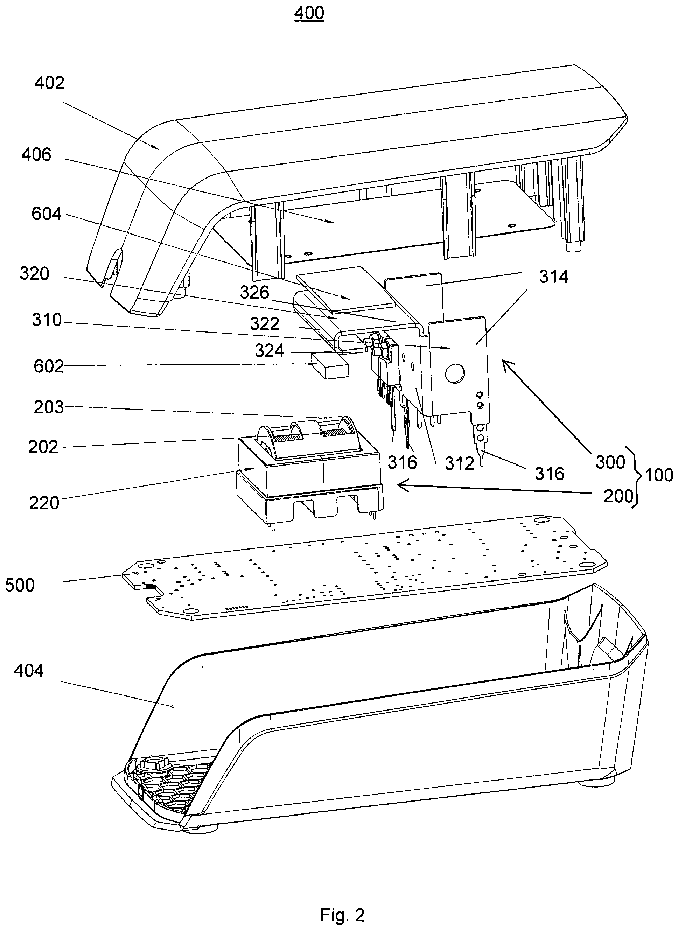

The present invention will now be explained in more detail with reference to the Figures and firstly referring to Figure 2. Figure 2 shows an exploded view of a switching power supply 400. The switching power supply 400 comprises a housing formed by a cover element 402 and a bottom element 404. The housing elements are made of an isolating material such as a plastic. The housing elements serve to mechanically support and protect the integrated parts. In particular, the cover element 402 comprises a heat sink element 406, also referred to as second heat sink 406, and the bottom element 404 supports a printed circuit board (PCB) 500. The PCB serves for mechanically supporting and electrically contacting the transformer unit 100.

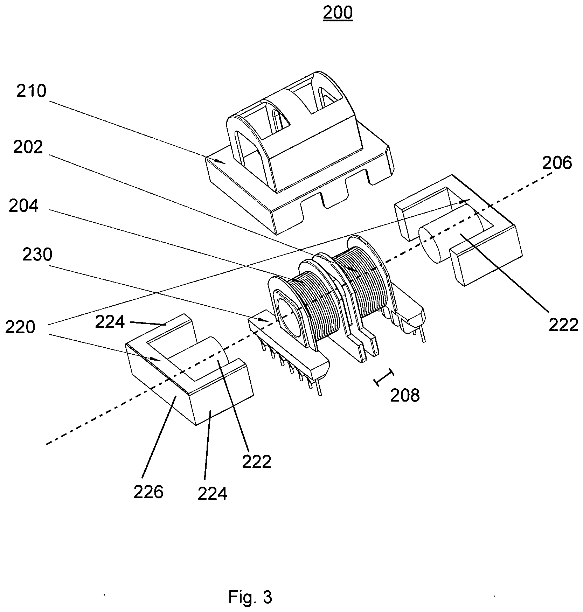

The transformer unit 100 comprises a transformer 200 and a shielding element 300. The transformer 200 is described in detail with reference to Figure 3. The transformer 200 comprises a primary winding 202 and a secondary winding 204. In particular, the transformer 200 transfers electrical energy between the primary winding 202 and the secondary winding 204 through electromagnetic induction. A varying current in the primary winding 202 of the transformer produces a varying magnetic field, which in turn induces a varying electromotive force or voltage in the secondary winding 204. Although not shown in the drawings, the varying current is for example generated by a switch network supplying an alternating voltage. The switch network is, for example, mounted on the PCB 500.

As further shown in Figure 3, the primary winding 202 and the secondary winding 204 of the transformer 200 share a common longitudinal axis 206. In other words, the poles of the windings are arranged side by side. By this arrangement the primary winding 202 and the secondary winding 204 are inductively coupled.

Furthermore, the primary winding 202 and the secondary winding 204 are spaced by a distance 208. This distance 208 causes a loose coupling of the windings, whereby the leakage inductance is generated. Furthermore, the distance 208 is in a range of 1 to 10 millimeters and is preferably 6.5 mm, and thus, the requirements of a clearance distance between the primary winding 202 and the secondary winding 204 for the application of a battery charger for a bicycle or the like are met.

Additionally, the transformer 200 comprises two three-legged magnetic cores 220. Each core 220 comprises a cylindrical central part 222, which is received by the windings 202 and 204. Furthermore, each core 220 comprises a yoke 226, which connects the central part 222 with two rectangular side legs 224. As best shown in figure 2, the three-legged magnetic cores 220 form a closed shell surrounding the windings of the transformer. The windings 202 and 204 are surrounded by the magnetic cores 220, and thus, the transformer 200 is constructed in a shell form.

Although not shown in the figures, the central part 222 is not limited to a cylindrical shape. For example, the central part may have any other polygonal shape. Same applies for the shape of the side legs 224, which can also have cylindrical shape or any other polygonal shape.

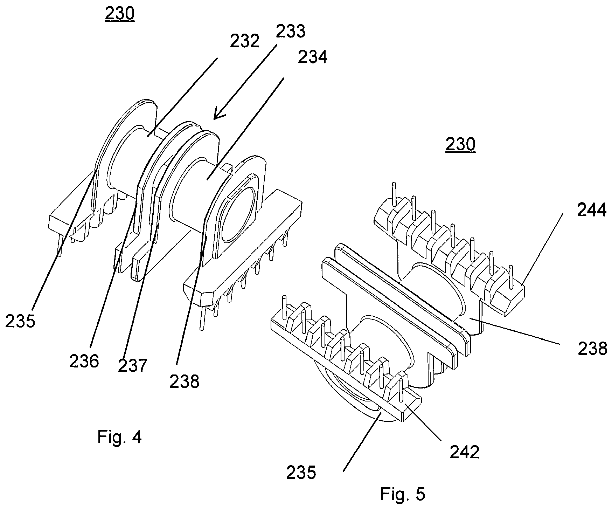

As shown in Figure 3, the primary winding 202 and the secondary winding 204 are carried by a bobbin 230. Thus, the bobbin 230 defines the positioning and stabilizes the windings 202 and 204 of the transformer 200. The bobbin is described with reference to Figures 4 to 10.

The bobbin 230 has a first cylindrical part 232 for carrying the first winding 202 and a second cylindrical part 234 for carrying the second winding 204. The first cylindrical part 232 comprises at a first base a first flange portion 235 and at a second base a second flange portion 236. The second cylindrical part 234 comprises at a first base a third flange portion 237 and at a second base the fourth flange portion 238.

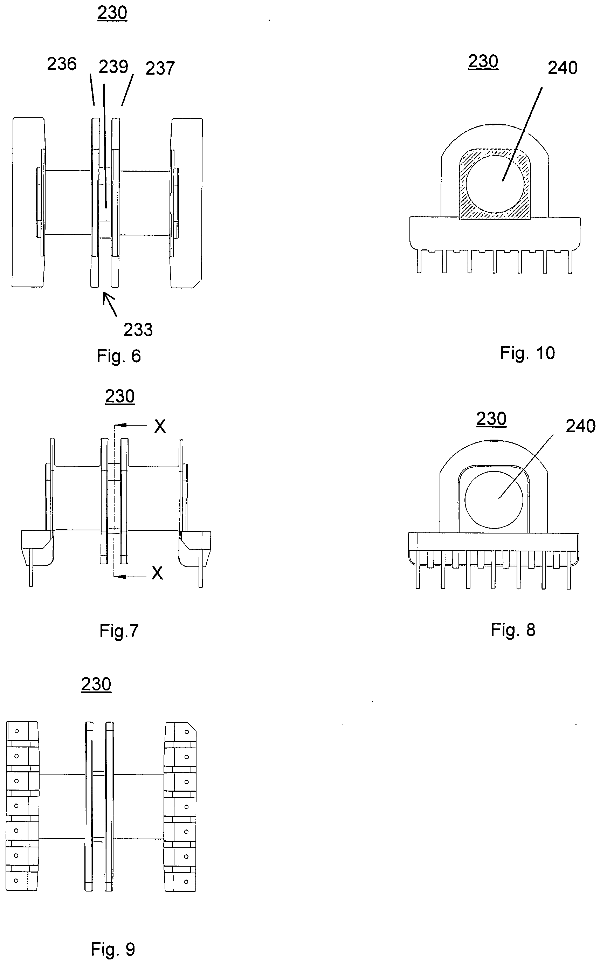

As best shown in Figure 6, the bobbin 230 further comprises a connecting element 239 arranged between the second flange portion 236 and the third flange portion 237. The connecting element 239, the second flange portion 236, and the third flange portion 237 form an insulation barrier 233. By the insulation barrier 230, and in particular due to the second and third flange portion 236 and 237, the clearance distance between the primary winding 202 and the secondary winding 204 is increased, and thus, the requirements for the clearance distance for the application of a battery charger for a bicycle or the like are met.

Consequently, the connecting element of the insulation barrier 233 serves to generate the leakage inductance and the second flange portion 236 and the third flange portion 237 increases the clearance distance, and thus, enable a safe and compact design.

As shown in Figure 8 and in Figure 10, a sectional view of the connecting element 239 along the line X-X of Figure 7, the first cylindrical part 232, the second cylindrical part 234, and the connecting element 239 comprises a feed through 240 for receiving the cylindrical central part 222 of the magnetic core 220. Thus, the feed through 240 increases the efficiency of the transformer 200.

As shown in Figure 5, the first flange portion 235 comprises a first connector stripe 242 and the fourth flange portion 238 comprises a second connector stripe 244. As shown in figure 2, the bobbin 230 is mechanically connected by the first connector stripe 242 and by the second connector stripe 244 to the printed circuit board 500.

Advantageously, the bobbin 230 is made of an insulating material such as a plastic. Although not shown in the figures, the bobbin 230 comprises conductive elements for electrically contacting the windings 202 and 204 with the PCB 500. The bobbin 230 with the conductive elements is, for example, manufactured by injection molding or a casting process.

Additionally, as shown in Figure 3 the transformer 200 comprises a cover 210 for housing the windings 202 and 204, the magnetic cores 222 and the bobbin 230. The cover 210 may be from an isolating material such as a plastic and may comprise a shielding foil. The cover comprises an opening 203 for thermally contacting the transformer 200.

Further, as shown in Figure 2, the transformer unit 100 comprises the shielding element 300. The shielding element 300 comprises a heat sink portion 310 and a clamping portion 320.

The heat sink portion 310 having the shape of a U with a central heat sink plate 312 facing the poles of the windings 202 and 204 and two wing plates 314 extending in the direction of the longitudinal axis of the windings 202 and 204. In particular, the wing plates 314 increase the surface of the heat sink portion 310 thereby allowing a more efficient dissipation of heat. The U-shape of the heat sink portion allows a compact design of the switching power supply.

The heat sink portion 310 of the shielding element 300 further comprises a plurality of pins 316 for thermally and/or electrically contacting the PCB 500 and for mechanically supporting the shielding element 300. Thus, the shielding element 300, which comprises the heat sink portion 310, can be electrically grounded and mechanically stabilized.

The clamping portion 320 having the shape of U comprises a central clamp portion 322 extending in a direction perpendicular to the longitudinal axis of the first winding 202, a first connecting portion 324 facing the first winding 202 and a second connecting portion 326 facing the second heat sink 406.

Advantageously, the shielding element 300 with the heat sink portion 310 and the clamping portion 320 is fabricated from a stamped and bent metal such as aluminum.

As shown in Figure 2, the shielding element 300 is thermally coupled by a first elastic thermal coupling element 602 to the primary winding 202. In particular, the cover 210 of the transformer 200 comprise an opening 203 for receiving the first elastic thermal coupling element 602 and the first connecting portion 324 of the shielding element 300.

Consequently, heat generated by the primary winding 202 of the transformer 200 can be efficiently transported via this thermal connection to the heat sink portion 310 of the shielding element 300.

Additionally, the first connection portion 324, which is made of a metal such as aluminum, covers the first winding 302, and thus, blocks the electric field of the EMI noise caused by the leakage inductance. As already discussed above, the shielding element 300 is grounded via at least one of the plurality of pins 316. Additionally, the central plate 312 of the heat sink portion 310 of the shielding element 300, which is also made of a metal such as aluminum, covers one pole of the primary winding 302, and thus, also blocks the electric field of the EMI noise caused by the leakage inductance.

Consequently, the shielding element 300 efficiently shields the EMI noise generated by the leakage inductance and cools directly the primary winding 202 of the transformer. Additionally, the secondary winding 204 is indirectly cooled by the connection via the magnetic cores 220.

Furthermore, as shown in Figure 2, the shielding element 300 is thermally coupled by a second elastic thermal coupling element 604 to the second heat sink 406. Thus, the heat dissipation rate can be increased.

Additionally, the clamping portion 320 is arranged between the second heat sink 406 and the first winding 202. Thus, the contact pressure between the first connection portion 324 and the first winding 202 can be increased and the contact pressure between the second connection portion 326 and the second heat sink 406 can be increased. By increasing the contact pressure also the thermal coupling can be increased. Thus, the heat can be transported more efficiently to the heat sink 310 and the second heat sink 406.

Although not shown in the figures, the PCB 500 may comprise at least one resonance capacitance and one power electronic including at least one switching element, for example a MOSFET. As shown in Figure 2, the shielding element 300 comprises pins 316, which are received by the PCB 500. Thus, the heat sink portion 310 of the shielding element 300 is also used to dissipate heat generated by the power electronic components supported by the PCB 500.

**Reference Numerals**

| **Reference Numerals** | **Description** |
|---|---|
| 100 | transformer unit |
| 200 | transformer |
| 202 | primary winding |
| 203 | first opening |
| 204 | secondary winding |
| 206 | longitudinal axis |
| 208 | distance |
| 210 | cover |
| 220 | three-legged magnetic core |
| 222 | cylindrical central part |
| 224 | rectangular side legs |
| 226 | yoke |
| 230 | bobbin |
| 232 | first cylindrical part |
| 234 | second cylindrical part |
| 235 | first flange portion |
| 236 | second flange portion |
| 237 | third flange portion |
| 238 | fourth flange portion |
| 239 | connecting element |
| 242 | first connector stripe |
| 244 | second connector stripe |
| 300 | shielding element |
| 310 | heat sink portion |
| 312 | central plate |
| 314 | wing plates |
| 320 | clamping portion |
| 322 | central clamp portion |
| 324 | first connecting portion |
| 326 | second connecting portion |
| 400 | switching power supply |
| 402 | cover element |
| 404 | bottom element |
| 406 | second heat sink |
| 602 | first thermal coupling element |
| 604 | second thermal coupling element |

## Claims

1. Transformer unit (100) for a resonant converter comprising;
a primary winding (202) loosely coupled by induction to at least one secondary winding (204), whereby a leakage inductance is generated, and
a shielding element (300) covering at least one of the primary winding (202) or the secondary winding (204) for blocking electromagnetic noise generated by the leakage inductance,
wherein the shielding element (300) is thermally coupled to at least one of the primary winding or the secondary winding for transferring heat generated by the transformer unit (100).

2. Transformer unit according to claim 1, wherein the shielding element further comprises a heat sink portion (310) for dissipating the transferred heat to a fluid.

3. Transformer unit according to claims 1 or 2, wherein the shielding element further comprises a clamping portion (320) for pressing the shielding element to the transformer unit.

4. Transformer unit according to one of the preceding claims, wherein the shielding element is fabricated from a stamped and bent metal sheet.

5. Transformer unit according to one of the preceding claims, further comprising an elastic thermal coupling element (602) for thermally coupling the shielding element to at least one of the primary winding or the secondary winding.

6. Transformer unit according to one of the preceding claims, wherein the first winding and the second winding have a common longitudinal axis (206).

7. Transformer unit according to one of the preceding claims, further comprising a first bobbin (232) carrying the first winding and a second bobbin (234) carrying the second winding.

8. Transformer unit according to claim 7, further comprising an insulation barrier (233) for increasing the creepage distance, wherein the insulation barrier is arranged between the first bobbin and the second bobbin.

9. Transformer unit according to one of the preceding claims, wherein at least one of the primary winding or the secondary winding comprises a magnetic core (220).

10. Transformer unit according to claim 8, wherein the magnetic core has a three-legged structure for forming a closed magnetic system.

11. Resonant power converter, comprising
a switch network supplying an alternating voltage to a resonant tank, wherein the resonant tank comprises a resonant inductance (Lr) and at least one reactive element, and
a transformer (200),
wherein the resonant inductance and the transformer are formed by a transformer unit (100) according to one of the preceding claims.

12. Switching power supply, comprising
a printed circuit board (500) electrically connecting the resonant power converter according to claim 11.

13. Switching power supply according to claim 12, wherein the printed circuit board mechanically supports the shielding element (300).

14. Switching power supply according to claims 13, wherein the shielding element is thermally coupled to at least one power electronic component supported by the printed circuit board for transferring heat generated by the power electronic component.

15. Switching power supply according to claims 12 to 14, wherein a housing element (402) of the switching power supply comprises a second heat sink (406), wherein the second heat sink (406) is thermally coupled to the shielding element (300).
